# EUROPÄISCHE PATENTSCHRIFT

(11) **EP 1 961 618 B1**
(45) Veröffentlichungstag und Bekanntmachung des Hinweises auf die Patenterteilung: **28.09.2011**
(21) Anmeldenummer: 08101145.4
(22) Anmeldetag: 31.01.2008
(51) Int. Cl.: B60R 11/02, G09G 5/14, H04N 5/445, G06F 3/041, B60W 50/08

(54) **Verfahren für die Zuweisung der Bedienung von Ausrüstung zu einem spezifischen Bediener**
Method for assigning the operation of equipment to a particular operator
Procédé d'attribution de la commande d'équipement à un utilisateur spécifique

(30) Priorität: 01.02.2007 US 700776
(43) Veröffentlichungstag der Anmeldung: 27.08.2008
(73) Patentinhaber: Hella KGaA Hueck & Co., 59552 Lippstadt (DE)
(72) Erfinder: Nix, Axel, Birmingham, MI 48009 (US); Rosenmayr, Marc, Novi, MI 48375 (US); Nitsche, Brgitte Dorothea, 59558 Lippstadt (DE); Harvey, Tom, Novi, MI 48377 (US)

(56) Entgegenhaltungen:
- EP-A2- 1 710 672
- WO-A1-2004/022388
- DE-A1-102004 033 275
- GB-A- 2 428 094

## Beschreibung

### TECHNISCHES GEBIET

Diese Beschreibung bezieht sich auf die Zuordnung der Bedienung von Ausrüstung zu einem von mehreren Bedienern.

### HINTERGRUND DER ERFINDUNG

Fahrzeuge enthalten eine Vielzahl von Bedienelementen, die sich in Reichweite sowohl eines Fahrers als auch eines vorderen Beifahrers befinden. Somit können die Bedienelemente entweder von dem Fahrer, oder dem vorderen Beifahrer bedient werden. Die Bedienelemente, z. B. Schalter, Knöpfe, Tasten, Drehschalter und Vorrichtungen zur Eingabe durch den Benutzer, wie zum Beispiel Touchscreens, werden zur Steuerung und/oder Überwachung verschiedener Ausrüstungsgegenstände verwendet, wie etwa der Innenbeleuchtung, des Radios, des CD-Players, des Navigationssystems, des Telefons und der Klimaanlage. Um die Anzahl speziell zugeordneter Bedienelemente zu reduzieren, können multifunktionale Bedienelemente eingesetzt werden, insbesondere dann, wenn die Komplexität der bedienten Ausrüstung eine Reduzierung der Anzahl von Bedienelementen erforderlich macht. Darüber hinaus kann eine Senkung der Anzahl von Bedienelementen wünschenswert sein, um eine ästhetisch ansprechende Gestaltung des Fahrzeuginnenraums zu ermöglichen. Zum Beispiel könnte ein sauberes Erscheinungsbild mit nur einigen wenigen Bedienelementen einer Anordnung mit vielen verschiedenen Bedienelementen, die als Unordnung wahrgenommen wird, vorgezogen werden. Eine besonders vielseitige Ausführung eines multifunktionalen Bedienelements verwendet Touchscreens, auf denen Schaltflächen auf einem Bildschirm angezeigt werden können. Sie erkennen, wo der Bildschirm berührt wird und setzen die Position der Schaltfläche und die Stelle der Berührung zueinander in Beziehung, um so die entsprechende Ausrüstungsfunktion zu aktivieren, die mit der angezeigten Schaltfläche verbunden ist.

Die Zunahme an Funktionen und deren Bedienelemente, die dem Fahrer zur Verfügung stehen, kann auch das Risiko bergen, dass der Fahrer von der Bedienung des Fahrzeugs abgelenkt wird. Dementsprechend können Bedienelemente oder Funktionen in Funktionsgruppen angeordnet werden, die während des Fahrens sicher bedient werden können, und solche, die während des Fahrens nicht bedient werden sollten. Beispielsweise können Sperrprotokolle eingesetzt werden, um die Bedienung bestimmter Ausrüstungsfunktionen nur bei Stillstand des Fahrzeugs oder wenn der Schalthebel in der Parkposition steht zu gestatten.

Verschiedene Bedienelemente oder Funktionen können auch zur ausschließlichen Bedienung durch den Fahrer ausgewiesen werden. Schlüssellose Startsysteme ermöglichen zum Beispiel das Anlassen des Fahrzeugmotors durch Betätigung einer Motor-Starttaste, beispielsweise dann, wenn ein drahtloses Gerät zur Benutzeridentifizierung in dem Fahrzeug vorhanden ist. Hierdurch entfällt die Notwendigkeit, einen Schlüssel in das Zündschloss einzuführen. Die Vorrichtung zur Fernsteuerung der Zündung kann außerdem vorsehen, dass sich der Benutzer in einer bestimmten Entfernung zum Fahrersitz befindet, bevor ein Fernstart des Motors möglich ist. Die drahtlose Identifizierungsvorrichtung kann außerdem die Fähigkeit zum Starten des Motors so beschränken, dass nur der Fahrer die Motor-Starttaste betätigen kann.

Auch Dual-View-Displays, die dem Fahrer und dem Beifahrer jeweils unterschiedliche Bilder anzeigen, werden in Fahrzeugen eingesetzt. In einigen Dual-View-Displays sind beispielsweise je nach Blickwinkel unterschiedliche Bilder sichtbar. Somit sieht der Fahrer auf einem Dual-View-Display ein erstes Bild, zum Beispiel eine Navigationskarte, während der Beifahrer gleichzeitig an anderes Bild, z. B. einen Film von einer DVD, auf ein und demselben physikalischen Anzeigebildschirm betrachten kann.

Das US-Patent Nr. 7.009.488 (Schwartz) bezieht sich auf ein beispielhaftes Verfahren zur selektiven Sperrung von Bedienelementen, die einem Bediener zur Verfügung stehen. Es wird durch Bezugnahme vollinhaltlich Bestandteil dieses Dokuments. Das Verfahren erkennt aktiv, wenn ein Bediener auf ein Bedienelement zugreift, für das eine Sperre gewünscht wird. Die aktive Erkennung des Zugriffs auf ein Bedienelement durch einen Bediener erfolgt, indem zuerst ein Signal erzeugt wird, das an eine Platte übertragen wird, wo es dann durch den Bediener mit einem Empfänger gekoppelt wird. Das Signal wird an einem mit einem Bedienelement verbundenen Signalempfänger erkannt, so dass das Bedienelement auf das Signal reagieren kann.

Die PCT Publikation WO2004/078536 (Donat) bezieht sich auf eine Schaltung zur selektiven Erzeugung von Schaltsignalen. Die Schaltung ist dadurch gekennzeichnet, dass ein Signal ausgesendet und über den Benutzer während der Betätigung der Schaltvorrichtung übertragen wird. Das Signal wird an der Schaltvorrichtung kapazitiv in den Benutzer gekoppelt. Als Empfangsfläche für das Signal kann eine Sitzheizungsmatte verwendet werden. Zwischen dem Fahrer und Beifahrer in einem Fahrzeug wird durch zwei Empfänger unterschieden, wobei sich der eine Empfänger im Fahrersitz, und der andere im Beifahrersitz befindet. Wird der Signalweg umgekehrt, kann durch Kopplung verschiedener Frequenzen in jeden einzelnen Benutzer und durch Auswertung der empfangenen Frequenz an der Schaltvorrichtung zwischen verschiedenen Benutzern unterschieden werden.

Dokument GB 2428094 (Sharp) beschreibt ein Bediensystem gemäß dem Oberbegriffs des Anspruchs 1.

### ZUSAMMENFASSUNG DER ERFINDUNG

Bestehende Verfahren zur Unterscheidung der Bedienung von Ausrüstung in einem Fahrzeug durch Fahrer und Beifahrer verwenden mehrere Signalgeneratoren in Kombination mit einem gemeinsamen Signalempfänger, oder einen einzelnen Signalgenerator in Kombination mit mehreren Signalempfängern. Eine kostengünstigere Lösung ohne die Notwendigkeit redundanter Hardware ist jedoch wünschenswert. Darüber hinaus ist die Berücksichtigung vormals vernachlässigter Fehlermodi einschließlich beabsichtigter Manipulation wünschenswert.

Eine oder mehrere der folgenden Ausführungsformen weisen die Bedienung von Ausrüstung in einem Fahrzeug einem spezifischen Bediener zu, um die Sicherheit zu erhöhen und die Verwendung gemeinsamer Bedienelemente für verschiedene Funktionen durch mehrere Bediener zu ermöglichen. Die Anzahl von Signalgeneratoren oder Signalempfängern zur Unterscheidung zwischen Bedienern kann reduziert werden, wodurch ein kostengünstigeres Verfahren mit einem einzelnen Signal und einer einfachen Logik zur Verfügung gestellt wird. Zusätzlich oder als Alternative wird eine robuste Lösung, die vormals vernachlässigte Fehlermodi einschließlich beabsichtigter Manipulation von Fahrer- oder Beifahrer-Sperrkonfigurationen berücksichtigt, in einem System geboten, das sich problemlos in ein Fahrzeug integrieren lässt.

In einem allgemeinen Aspekt enthält ein System zur Bedienung von Fahrzeugausrüstung einen Signalgenerator, eine operativ mit dem Signalgenerator verbundene leitfähige Fläche, sowie eine Touchscreen-Vorrichtung. Die Touchscreen-Vorrichtung beinhaltet einen Touchscreen, eine operativ mit dem Touchscreen verbundene Bewertungseinrichtung des Bedienzustands, einen operativ mit dem Touchscreen verbundenen Signalempfänger, sowie ein Prozesssteuergerät, das so konfiguriert ist, dass es eine Ausgabe von dem Signalempfänger und eine Ausgabe von der Bewertungseinrichtung des Bedienzustands erkennt. Das Steuergerät ist so konfiguriert, dass es basierend auf einem erkannten Signal von dem Signalgenerator eine erste Funktion aktiviert, und dass es eine zweite Funktion aktiviert, wenn das Signal von dem Signalgenerator nicht erkannt wird.

Implementierungen dieses Aspekts können eines oder mehrere der folgenden Merkmale beinhalten. Beispielsweise kann die leitfähige Fläche innerhalb eines Fahrzeugssitzes in einem Fahrzeug zur Verfügung gestellt werden. Bei dem Sitz kann es sich um den Fahrersitz oder um einen Sitz neben dem Fahrersitz innerhalb eines Fahrzeugs handeln. Das Prozesssteuergerät kann so konfiguriert werden, dass basierend auf dem erkannten Signal ein erster Systembenutzer der Ausgabe der Bewertungseinrichtung des Bedienzustands zugeordnet wird. Das Prozesssteuergerät kann so konfiguriert werden, dass der Ausgabe der Bewertungseinrichtung des Bedienzustands ein anderer Systembenutzer zugeordnet wird, wenn das Signal des Signalgenerators von dem Signalempfänger nicht erkannt wird.

Das System kann einen operativ mit dem Signalgenerator gekoppelten Sitz enthalten, wobei der Signalempfänger für den Empfang eines Signals konfiguriert ist, das von dem Signalgenerator durch die leitfähige Fläche und einen Benutzer an den Touchscreen übertragen wird. Der Signalempfänger kann so konfiguriert sein, dass er das Signal erkennt, das durch einen in dem Sitz befindlichen Bediener geleitet wird. Bei dem Signalgenerator kann es sich um ein schlüsselloses Startgerät handeln, und das Prozesssteuergerät kann so konfiguriert sein, dass es einen Benutzer basierend auf dem Signal von dem schlüssellosen Startgerät erkennt. Die Touchscreen-Vorrichtung kann eine Dual-View-Touchscreen-Vorrichtung sein, die in der Lage ist, verschiedenen Benutzern gleichzeitig verschiedene Bilder anzuzeigen. Die leitfähige Fläche kann eine Sitzheizungsmatte innerhalb eines Fahrzeugsitzes sein, und der Signalgenerator kann kapazitiv, resistiv oder elektrostatisch mit der Sitzheizungsmatte gekoppelt sein. Das System kann eine Drossel zur Gleichtaktunterdrückung enthalten, die operativ zwischen der Sitzheizungsmatte und einer Fahrzeugstromversorgung und Masse angeschlossen ist.

In einem weiteren allgemeinen Aspekt beinhaltet eine Methode zur Bedienung von Ausrüstung die Bewertung des Bedienzustands eines Bedienelements einer Ausrüstung und die Erkennung, ob ein Signal, das einem Bediener des Bedienelements einer Ausrüstung zugeordnet ist, vorhanden ist. Basierend auf dem bewerteten Bedienzustand wird eine erste Ausrüstungsfunktion aktiviert, wenn das Signal von dem Bedienelement einer Ausrüstung vorhanden ist, oder es wird eine zweite Ausrüstungsfunktion aktiviert, wenn das Signal nicht vorhanden ist.

Implementierungen dieses Aspekts können eines oder mehrere der folgenden Merkmale beinhalten. Beispielsweise kann es sich bei dem Bedienelement einer Ausrüstung um einen Touchscreen für eine Touchscreen-Vorrichtung handeln. Das Bedienelement einer Ausrüstung kann ein Touchscreen für eine Dual-View-Touchscreen-Vorrichtung sein, die verschiedenen Benutzern gleichzeitig verschiedene Bilder anzeigt. Das Bedienelement einer Ausrüstung kann operativ mit Ausrüstung innerhalb des Fahrzeugs verbunden sein. Der bewertete Bedienzustand kann einem ersten Bediener der Ausrüstung zugeordnet werden, wenn das Signal vorhanden ist, und der bewertete Bedienzustand kann einem zweiten Bediener des Bedienelements einer Ausrüstung zugeordnet werden, wenn das Signal nicht vorhanden ist. Ein Signal von einem Signalgenerator kann über einen Bediener an eine leitfähige Fläche des Bedienelements einer Ausrüstung übertragen werden. Bei dem Signal kann es sich um ein kapazitiv, resistiv, und/oder elektrostatisch gekoppeltes, von dem Signalgenerator erzeugtes Signal handeln. Die Bewertung des Bedienzustands kann die Bestimmung der Position einer Eingabe an das Bedienelement einer Ausrüstung beinhalten. Die Eingabe an das Bedienelement einer Ausrüstung kann, wenn das Signal vorhanden ist, einem ersten Insassen eines Fahrzeugs zugeordnet werden, und die Eingabe an das Bedienelement einer Ausrüstung kann, wenn das Signal nicht vorhanden ist, einem zweiten Insassen eines Fahrzeugs zugeordnet werden.

Basierend auf der Erkennung des Signals kann die Bedienung der Ausrüstung einem spezifischen Bediener unter mehreren Bedienern zugeordnet werden. Zu den Bedienern können ein Fahrer und ein vorderer Beifahrer in einem Kraftfahrzeug zählen. Das Signal kann operativ mit einem vorderen Beifahrersitz des Kraftfahrzeugs gekoppelt werden. Um anzuzeigen, ob sich ein Fahrer oder ein vorderer Beifahrer auf einem Vordersitz eines Kraftfahrzeugs befinden, kann ein Sensor zur Insassenerkennung verwendet werden. Das Signal kann operativ mit dem vorderen Beifahrersitz des Kraftfahrzeugs gekoppelt werden, wenn der Sensor zur Insassenerkennung anzeigt, dass der vordere Beifahrersitz besetzt ist. Das Signal darf mit dem vorderen Beifahrersitz nicht gekoppelt werden, wenn der Sensor zur Insassenerkennung anzeigt, dass der vordere Beifahrersitz nicht besetzt ist. Auf einem Dual-View-Touchscreen in einem Fahrzeug kann eine Schaltfläche angezeigt werden, die aus dem Blickwinkel eines Beifahrers sichtbar ist, und/oder auf dem Dual-View-Touchscreen in dem Fahrzeug kann ein Schaltfläche angezeigt werden, die aus dem Blickwinkel eines Fahrers sichtbar ist. Eine Funktion, die einem Beifahrer in dem Fahrzeug zugeordnet ist, kann aktiviert werden, wenn der Touchscreen an einer Stelle berührt wird, die der aus dem Blickwinkel eines Beifahrers sichtbaren Schaltfläche entspricht und wenn das Signal vorhanden ist. Eine Funktion, die einem Fahrer in dem Fahrzeug zugeordnet ist, kann aktiviert werden, wenn der Touchscreen an einer Stelle berührt wird, die der aus dem Blickwinkel des Fahrers sichtbaren Schaltfläche entspricht und wenn das Signal nicht vorhanden ist. Die zweite Ausrüstungsfunktion kann deaktiviert werden, wenn das Signal nicht vorhanden und das Fahrzeug in Bewegung ist.

In einem weiteren allgemeinen Aspekt beinhaltet eine durch mehrere Bediener bedienbare Vorrichtung zur Bedienung von Ausrüstung eine Bewertungseinrichtung des Bedienzustands, die zur Bewertung des Bedienzustands eines Bedienelements einer Ausrüstung konfiguriert ist; ein Signalerfassungsgerät, das so konfiguriert ist, dass es erkennt, ob ein Signal, das einem Bediener des Bedienelements der Ausrüstung zugeordnet ist, vorhanden ist; und ein Prozesssteuergerät. Das Prozesssteuergerät ist so konfiguriert, dass es eine erste Ausrüstungsfunktion aktiviert, wenn das Signal von dem Bedienelement einer Ausrüstung vorhanden ist, und es ist so konfiguriert, dass es eine zweite Ausrüstungsfunktion aktiviert, wenn das Signal nicht vorhanden ist.

Einer oder mehrere der vorangegangenen Aspekte stellen einen Mechanismus zur selektiven Aktivierung von Ausrüstungsfunktionen basierend auf der Position des Bedieners zur Verfügung. Um die Bedienersicherheit zu erhöhen, die Anzahl physikalischer Bedienelemente zu reduzieren, und/oder Benutzerschnittstellen in Form von Dual-View-Touchscreens zu ermöglichen, können verschiedene Merkmale aktiviert werden, die davon profitieren, dass die Position eines Bedieners bekannt ist.

In einem weiteren allgemeinen Aspekt enthält ein System zur Bedienung von Fahrzeugausrüstung über eine Touchscreen-Vorrichtung eine erste leitfähige Fläche, die operativ mit einem ersten Signalgenerator verbunden ist; eine zweite leitfähige Fläche, die operativ mit dem ersten Signalgenerator oder einem zweiten Signalgenerator verbunden ist; und die Touchscreen-Vorrichtung. Die Touchscreen-Vorrichtung beinhaltet einen Dual-View-Touchscreen, eine operativ mit dem Touchscreen verbundene Bewertungseinrichtung des Bedienzustands, einen operativ mit dem Touchscreen verbundenen Signalempfänger, sowie ein Prozesssteuergerät, das so konfiguriert ist, dass es eine Ausgabe von dem Signalempfänger und eine Ausgabe von der Bewertungseinrichtung des Bedienzustands erkennt. Das Prozesssteuergerät ist so konfiguriert, dass es basierend auf einem erkannten Signal von der ersten leitfähigen Fläche eine erste Funktion aktiviert, und dass es basierend auf einem erkannten Signal von der zweiten leitfähigen Fläche eine zweite Funktion aktiviert.

In einem weiteren allgemeinen Aspekt enthält eine Touchscreen-Vorrichtung einen Dual-View-Touchscreen, wobei der Dual-View-Touchscreen bei Berührung eines Bildschirms des Dual-View-Touchscreens die Bedienung von Fahrzeugausrüstung durch einen ersten Bediener und mindestens einen zweiten Bediener ermöglicht; sowie ein Prozesssteuergerät zur Aktivierung einer ersten Funktion basierend auf einem ersten Signal, das dem ersten Bediener zugeordnet ist, und zur Aktivierung einer zweiten Funktion basierend auf einem zweiten Signal, das dem zweiten Bediener zugeordnet ist, wobei das erste Signal dem Prozesssteuergerät dann zur Verfügung gestellt wird, wenn der erste Bediener den Bildschirm berührt, und das zweite Signal dem Prozesssteuergerät dann zur Verfügung gestellt wird, wenn der zweite Bediener den Bildschirm berührt. Das erste Signal und das zweite Signal können von mindestens einem Signalgenerator erzeugt werden. Die erste Funktion und die zweite Funktion können jeweils Funktionen der Fahrzeugausrüstung kontrollieren und sie können jeweils dem ersten Bediener und dem zweiten Bediener zugeordnet werden.

Die folgende detaillierte Beschreibung der Erfindung ist lediglich als beispielhaft zu verstehen und hat nicht die Absicht, die Erfindung oder die Anwendung und Nutzungsmöglichkeiten der Erfindung zu beschränken. Weiterhin besteht nicht die Absicht, durch eine in dem vorangegangenen Hintergrund der Erfindung vorgestellte Theorie oder durch die folgende detaillierte Beschreibung der Erfindung gebunden zu sein.

Die Erfindung wird durch die angehängte Ansprüche limitiert.

### BESCHREIBUNG DER ZEICHNUNGEN

ABBILDUNG 1 ist ein erläuterndes Diagramm, das einen Aspekt der vorliegenden Erfindung zeigt, angewendet auf einen sitzenden Ausrüstungsbediener eines Fahrzeugs.

ABBILDUNG 2 ist ein Ablaufdiagramm, das einen beispielhaften Prozess für die Aktivierung von Ausrüstungsfunktionen zeigt.

ABBILDUNG 3 ist eine Tabelle, die alternative Kontrollkonfigurationen für einen Beifahrer oder Fahrer eines Fahrzeugs zeigt.

ABBILDUNG 4 ist ein Blockdiagramm, das einen beispielhaften Prozess für die Erkennung eines Signals zeigt.

ABBILDUNG 5 ist ein Schemadiagramm, das ein Beispiel für ein mit einer Sitzheizungsmatte gekoppeltes Signal zeigt.

ABBILDUNG 6 ist ein Diagramm, das ein Beispiel für ein Dual-View-Display aus verschiedenen Blickwinkeln zeigt.

ABBILDUNG 7 ist ein Ablaufdiagramm, das einen auf ein Dual-View-Display angewendeten beispielhaften Prozess zeigt.

ABBILDUNG 8 ist ein Schemadiagramm, das eine beispielhafte Touchscreen-Bedienung zeigt.

ABBILDUNG 9 ist ein Schemadiagramm, das eine beispielhafte Touchscreen-Bedienstelle auf einem Touchscreen zeigt.

### DETAILLIERTE BESCHREIBUNG

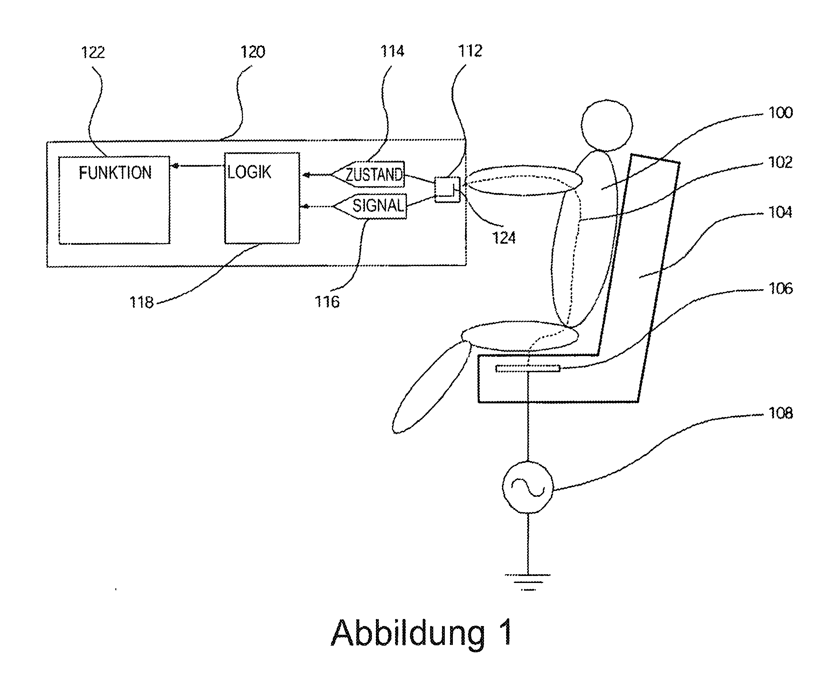

Unter Bezugnahme auf Abbildung 1 beinhaltet ein beispielhaftes System zur Erkennung und Implementierung von bedienerspezifischen Funktionen einen Signalgenerator 108, einen Bediener in Form eines Fahrers oder Beifahrers 100 in einem Sitz 104, sowie Ausrüstung 120 zur Implementierung von Funktion 122. Ein Ausrüstungsbediener 100, wie zum Beispiel der Fahrer oder der vordere Beifahrer in einem Automobil, sitzt in einem Sitz 104 zur Bedienung von Ausrüstung 120 über ein Bedienelement 112, z. B. Schalter, Knöpfe, Tasten, Drehschalter und Touchscreens, verwendet zur Steuerung verschiedener Ausrüstungsgegenstände, z. B. Innenbeleuchtung, Radio, CD-Player, Navigationssystem, Telefon und Klimaanlage. Ein von dem Signalgenerator 108 erzeugtes Signal wird mit dem Bediener 100 über eine leitfähige Fläche 106 gekoppelt, während der Bediener 100 in einem Sitz 104 sitzt. Die Kopplung ist kapazitiv, da das leitfähige Element 106 von dem Benutzer durch Kleidung, das Sitzpolster usw. isoliert ist. Das Signal wird entlang eines Weges 102 durch die hinteren Körperteile, z. B. Gesäß, Oberschenkel und Rücken, zu den oberen Gliedmaßen des Bedieners, z. B. Finger, Hand und Handgelenk, geleitet, von wo aus das Signal zu einem resistiv leitfähigen Element 124 weiter geleitet wird, das sich innerhalb des Bedienelements 112 und/oder in der Nähe der Oberfläche von Bedienelement 112 befindet. Die Übertragung des Signals von den oberen Gliedmaßen des Bedieners an das leitfähige Element 124 erfolgt kapazitiv und wird von der Leitfähigkeit zwischen dem Bediener 100 und dem Bedienelement 112 nicht beeinträchtigt, die im Allgemeinen schwer einschätzbar sein kann.

Da die Möglichkeit besteht, dass der Bediener 100 elektrisch isolierende Handschuhe trägt, wird eine kapazitive Kopplung bevorzugt. Der Signalempfänger 116 erkennt, ob an dem leitfähigen Element 124 ein Signal anliegt, das mit den Eigenschaften des von dem Signalgenerator 108 erzeugten Signals konsistent ist. Die Aktivierung des Bedienelements 112 wird von einer Bewertungseinrichtung des Bedienzustands 114 erkannt. Die Ausgaben der Bewertungseinrichtung des Bedienzustands 114 und des Signalempfängers 116 werden an eine Logikeinheit 118 geleitet, wo das Vorhandensein des Signals und der Bedienzustand logisch miteinander kombiniert werden, um ein Steuergerät zur Implementierung der Funktion 122 zu aktivieren. Die Logikeinheit 118 kann ein Prozesssteuergerät enthalten, z. B. mit Speicher und Schaltkreisen, das zur Durchführung verschiedener Steuer- und Logikfunktionen konfiguriert ist. Obwohl die Logikeinheit 118, die Bewertungseinrichtung des Bedienzustands 114, und/oder der Signalempfänger 116 als monolithische Geräte dargestellt sind, kann jedes auch in einen einzelnen Mikroprozessor integriert werden, gemeinsame Hardware und Schaltungen nutzen, und/oder als einzelne Komponente innerhalb eines oder mehrerer Module ausgeführt sein, innerhalb von oder operativ verbunden mit der Ausrüstung 120. In einer Ausführungsform kann die Funktion 122 die Erzeugung eines seriellen Datensignals beinhalten, das von der Ausrüstung 120 an einen anderen Ausrüstungsgegenstand in dem Fahrzeug übertragen wird, beispielsweise über einen Kommunikationsbus wie zum Beispiel ein Controller Area Network (CAN), ein Local Interconnect Network (LIN) oder Flexray.

Wenn die Oberfläche von Bedienelement 112 resistiv leitfähig ist, so kann das resistiv leitfähige Element 124 weggelassen und der Signalempfänger 116 direkt mit der Oberfläche von Bedienelement 112 verbunden werden. Der Signalempfänger 116 kann das Signal erkennen, wenn die vorderen Gliedmaßen des Bedieners resistiv mit der Oberfläche von Bedienelement 112 gekoppelt sind. Als Alternative oder zusätzlich kann der Signalempfänger 116 erkennen, ob das Signal kapazitiv mit der Oberfläche von Bedienelement 112 gekoppelt ist, so dass z. B. keine Beeinträchtigung durch Kleidung des Bedieners, wie etwa Handschuhe, entsteht.

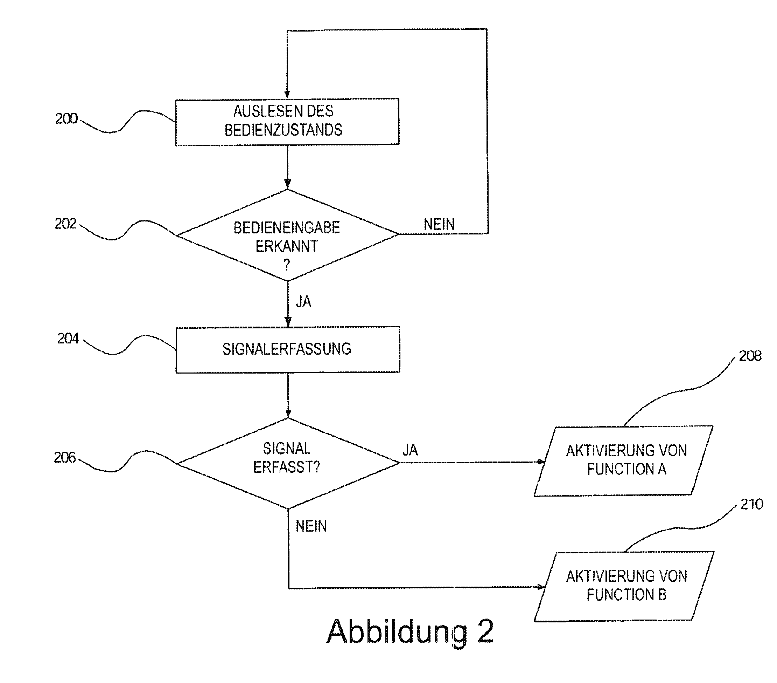

Unter Bezugnahme auf Abbildung 2 beinhaltet ein beispielhafter Prozess zur selektiven Aktivierung der Funktionen A, B, das Auslesen eines Bedienzustands 200 und die Erkennung einer Bedieneingabe 202, um zu bestimmen, ob eine Bedieneingabe erfolgt ist. Die Prozessschritte des Auslesens eines Bedienzustands 200 und der Bewertung der Bedieneingabe 202 können - etwa in regelmäßigen Abständen in Übereinstimmung mit einem festgelegten Intervall - so lange wiederholt werden, bis eine Bedieneingabe erkannt wird. Wenn eine Bedieneingabe erkannt wird, wird der Prozess mit Schritt 204 fortgesetzt. In Schritt 204 versucht der Signalempfänger 116 das von dem Signalgenerator 108 erzeugte Signal zu erkennen. Als nächstes, in Schritt 206, wird bestimmt, ob das Signal erkannt wurde oder nicht. Wurde ein Signal erkannt, so aktiviert die Ausrüstung 120 die Funktion A 208 mit der Logik 118. Wurde kein Signal erkannt, so aktiviert die Ausrüstung 120 die Funktion B 210 mit der Logik 118.

Dementsprechend können der Signalgenerator 108 und der Signalempfänger 116 verwendet werden, um das Vorhandensein eines Signals (oder das Nichtvorhandensein eines Signals) zu erkennen, um selektiv entweder die Funktion A oder die Funktion B zu aktivieren. Wenn beispielsweise die Struktur von Abbildung 1 auf den Fahrersitz in einem Kraftfahrzeug angewendet wird, so können ein Signalgenerator 108 und ein Signalempfänger 116 verwendet werden, um selektiv verschiedene Fahrer- und/oder Beifahrerfunktionen zu aktivieren, je nach dem, ob bei dem Empfang einer Eingabe ein Signal empfangen wird, oder ob bei dem Empfang einer Eingabe kein Signal empfangen wird.

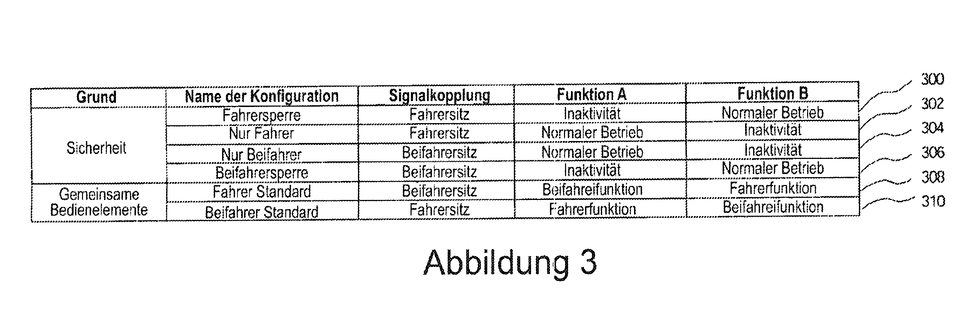

Unter Bezugnahme auf die Tabelle in Abbildung 3 können verschiedene Funktionen, die sich auf die Bedienersicherheit, das Fahrzeug, den Beifahrer, und/oder auf umweltbezogene Bedienelemente beziehen, unter Verwendung des Prozesses in Abbildung 2 implementiert werden. Die Tabelle in Abbildung 3 kann als eine Nachschlagetabelle im Speicher der Ausrüstung 120 gespeichert werden, beispielsweise um es dem System zu ermöglichen, zwischen Fahrer und Beifahrer zu unterschieden und/oder um die Verwendung von Bedienelementen zu ermöglichen, die von dem Fahrer und/oder dem Beifahrer gemeinsam genutzt werden.

Zum Beispiel bezieht sich die Sicherheitskontrolle 300 auf eine Fahrer-Sperrkonfiguration. In dieser Konfiguration ist ein Signal mit dem Fahrersitz gekoppelt. Wird das Vorhandensein des Signals von dem Signalempfänger 116 an dem Bedienelement 112 erkannt, so wird die Ausrüstungsfunktion 122 deaktiviert und auf diese Weise eine Sperre des Bedienelements 112 für den Fahrer festgelegt. Liegt das Signal an dem Bedienelement 112 nicht an, wird ein normaler Betrieb zugelassen, d. h. somit kann auch ein Beifahrer die Ausrüstung bedienen.

Die Sicherheitskontrolle 302 bezieht sich auf eine Nur-Fahrer-Konfiguration. In dieser Konfiguration ist ein Signal mit dem Fahrersitz gekoppelt. Das entsprechende Bedienelement ist nur dann funktionsfähig, wenn das Vorhandensein des Signals von dem Signalempfänger 116 an dem Bedienelement 112 erkannt wird. Wird das Signal nicht erkannt, ist das Bedienelement 112 inaktiv, somit kann z. B. nur der Fahrer das Bedienelement 112 bedienen.

Die Sicherheitskontrolle 304 bezieht sich auf eine Nur-Beifahrer-Konfiguration. In dieser Konfiguration ist ein Signal mit dem Beifahrersitz gekoppelt. Das Bedienelement ist nur dann funktionsfähig, wenn das Vorhandensein des Signals von dem Signalempfänger 116 an dem Bedienelement 112 erkannt wird. Wird kein Signal erkannt, ist das Bedienelement 112 inaktiv, somit kann z. B. nur der Beifahrer das Bedienelement 112 bedienen.

Die Sicherheitskontrolle 306 bezieht sich auf eine Beifahrer-Sperrkonfiguration. In dieser Konfiguration ist ein Signal mit dem Beifahrersitz gekoppelt. Wird das Vorhandensein des Signals von dem Signalempfänger 116 an dem Bedienelement 112 erkannt, wird von der Ausrüstung 120 eine Sperre des Beifahrers festgelegt. Liegt das Signal an dem Bedienelement 112 nicht an, wird ein normaler Betrieb zugelassen, somit kann z. B. auch der Fahrer die Ausrüstung bedienen.

Die allgemeine Kontrolle 308 bezieht sich auf eine Fahrer-Standardkonfiguration. In dieser Konfiguration ist das Signal mit dem Beifahrersitz gekoppelt. Wird das Vorhandensein des Signals von dem Signalempfänger 116 an dem Bedienelement 112 erkannt, wird die Beifahrerfunktion aktiviert. Liegt das Signal an dem Bedienelement 112 nicht an, wird die Fahrerfunktion aktiviert.

Die allgemeine Kontrolle 310 bezieht sich auf eine Beifahrer-Standardkonfiguration. In dieser Konfiguration ist das Signal mit dem Fahrersitz gekoppelt. Wird das Vorhandensein des Signals von dem Signalempfänger 116 an dem Bedienelement 112 erkannt, wird die Fahrerfunktion aktiviert. Liegt das Signal an dem Bedienelement 112 nicht an, wird die Beifahrerfunktion aktiviert.

Während einige der vorangegangenen Konfigurationen vom Umfang her ähnlich sind, z. B. Fahrer-Sperrkonfigurationen und Nur-Beifahrer-Konfigurationen, können die Unterschiede zwischen den verschiedenen Konfigurationen die Konfigurationen für bestimmte Anwendungen mehr oder weniger wünschenswert machen. Zum Beispiel betrifft eine Entwurfsüberlegung bei der Auswahl einer Konfiguration die Fehlermodi der Konfiguration. Zum Beispiel können verschiedene Fehler dazu führen, dass das Signal an dem Bedienelement 112 nicht erkannt wird, selbst dann, wenn sich der Bediener in dem Sitz befindet, in den das Signal gekoppelt ist; z. B. Ausfall des Signalgenerators, Kabelfehler zwischen dem Signalgenerator und der leitfähigen Fläche in dem Sitz, nicht ausreichende kapazitive Kopplung durch den Bediener, sowie Fehler bei der Signalerfassung. Unter Berücksichtigung dieser möglichen Ausrüstungsfehler kann eine bestimmte Konfiguration so gewählt werden, dass die Fahrzeugausrüstung 120 bei einem Systemfehler in einen sicheren oder standardmäßigen Zustand zurück kehrt.

Die Fahrer-Sperrkonfiguration 300 kann dann verwendet werden, wenn eine Manipulation der Fahrer-Sperrkonfiguration nicht von Bedeutung ist und/oder die Entfernung der Fahrersperre bei einem Fehler wünschenswert ist. Wenn zum Beispiel aufgrund eines Fehlers oder einer Manipulation an dem Bedienelement 112 kein Signal erkannt wird, obwohl die Bedienung durch den Fahrer erfolgt, wird die Sperre nicht aktiviert. Obwohl Sperren mit der Absicht implementiert werden, die Bedienersicherheit zu erhöhen, indem der Zugriff dann verhindert wird, wenn die Bedienung von Ausrüstung eine Gefahr darstellen könnte, kann eine solche Sperre möglicherweise als unerwünschte Bevormundung des Bedieners betrachtet werden. Aus diesem Grund könnte ein Bediener versuchen, die Sperre durch Manipulation zu entfernen, z.B. durch Deaktivierung des Signalgenerators 108, durch Trennen der Kabel zwischen dem Signalgenerator 108 und der leitfähigen Fläche 106 in dem Sitz 104, und/oder durch Deaktivierung einer von dem Signalgenerator benötigten Stromversorgung. Wenn somit eine Manipulationsgefahr zu berücksichtigen ist, kann die Ausrüstung in Fällen eines Ausrüstungsfehlers eine aktive Sperre aufrecht erhalten, wie es bei der Nur-Beifahrer-Konfiguration 304 der Fall ist. Die Nur-Beifahrer-Konfiguration 304 kann zusätzlich erweitert werden, indem der mit dem Beifahrersitz 104 gekoppelte Signalgenerator 108 nur dann aktiviert wird, wenn ein Beifahrer vorhanden ist, wie zum Beispiel durch einen Sensor zur Insassenerkennung angezeigt.

Der Fahrer kann an der Durchführung bestimmter komplexer Aufgaben gehindert werden, die eine relativ hohe Konzentration und/oder eine Aktivität durch den Bediener erfordern, wie zum Beispiel die buchstabenweise Eingabe eines Fahrtziels in ein Navigationssystem, z. B. während der Bediener das Fahrzeug lenkt oder das Fahrzeug in Bewegung ist. Es kann jedoch wünschenswert sein, einem vorderen Beifahrer die buchstabenweise Eingabe eines Fahrtziels zu gestatten, unabhängig davon, ob das Fahrzeug in Bewegung ist oder nicht. In diesem Beispiel ist die Nur-Beifahrer-Konfiguration 304 möglicherweise die wünschenswerteste, da diese Konfiguration die geringste Manipulationsanfälligkeit aufweist, z. B. durch Trennen des Signalgenerators 108, Entfernen einer Sicherung oder Durchtrennen eines Kabels. Jede solche Manipulation kann dazu führen, dass der Beifahrer daran gehindert wird, das Navigationssystem zu bedienen und/oder dass der Fahrer das Navigationssystem nicht bedienen kann, während es gesperrt ist. Als Alternative oder zusätzlich kann ein Sensor zur Insassenerkennung verwendet werden, um einen Fahrer daran zu hindern, das System zu überlisten, indem er das Vorhandensein eines Beifahrer in dem Fahrzeug imitiert. Ein Sensor zur Insassenerkennung kann beispielsweise auch verwendet werden, um zu verhindern, dass der Fahrer den Beifahrersitz mit der einen Hand berührt und gleichzeitig mit der anderen Hand das Navigationssystem bedient, um so einen Signalweg vom Beifahrersitz zum Bedienelement zu schaffen und dadurch zu simulieren, dass das Bedienelement von dem vorderen Beifahrer bedient wird. In diesem Fall kann der mit dem vorderen Beifahrersitz gekoppelte Signalgenerator nur dann aktiviert werden, wenn mittels des Sensors zur Insassenerkennung, wie er zum Beispiel typischerweise in einem Fahrzeug zur Überwachung des Anlegens der Sicherheitsgurte eingesetzt wird, ein Insasse erkannt wird.

Obwohl die Nur-Fahrer-Konfiguration 302 und die Beifahrer-Sperrkonfiguration 306 ähnlich sind, kann ein Ausrüstungsfehler - im Falle der Beifahrer-Sperrkonfiguration 306 - dem Fahrer dennoch erlauben, eine Funktion zu aktivieren, während bei der Nur-Fahrer-Konfiguration 302 der gleiche Fehler zur vollständigen Deaktivierung der Funktion führen kann.

In einem weiteren Beispiel kann die Fähigkeit, einen Fahrzeugmotor zu starten, auf den im Fahrersitz befindlichen Fahrer beschränkt werden. Ein schlüsselloses Startsystem zum Beispiel kann das Anlassen des Motors durch Betätigung einer Motor-Starttaste ermöglichen, sofern ein drahtloses Gerät zur Fahreridentifizierung innerhalb eines spezifizierten Bereichs um den Fahrersitz herum vorhanden ist. Dementsprechend ist die Starttaste in dem Fahrzeug so platziert, dass sie nur von dem Fahrer- und dem vorderen Beifahrersitz aus erreichbar ist. In diesem Beispiel hindert die Beifahrer-Sperrkonfiguration 306 den vorderen Beifahrer aktiv daran, den Motor unbeabsichtigt zu starten, während die Fähigkeit des Fahrers, den Motor zu starten, im Falle eines Ausrüstungsfehlers nicht eingeschränkt werden darf.

Dementsprechend kann das System eingesetzt werden, um bestimmte Funktionen in einem Fahrzeug selektiv für den Fahrer und/oder den vorderen Beifahrer zu aktivieren. Die gleiche Bedienung eines Bedienelements, z. B. das Drücken einer Taste, das Drehen eines Knopfes und/oder die Handhabung eines Touchscreens, kann dazu verwendet werden, eine bestimmte Funktion zu aktivieren, wenn diese Aktion durch den Fahrer erfolgt, und eine andere Funktion, wenn die Aktion durch den vorderen Beifahrer durchgeführt wird. Die Verwendung ein und derselben Bedienung eines Bedienelements für den Fahrer und den Beifahrer kann insbesondere für traditionell redundante Bedienelemente von Vorteil sein, wie zum Beispiel die Bedienung der gleichen Funktion für die Fahrer- und Beifahrerseite des Fahrzeugs, z. B. Sitzeinstellungen, Bedienung der Leseleuchten, elektrische Fensterheber, Einstellungen der Klimaanlage und/oder der Türschlösser. Die Fahrer-Standardkonfiguration 308 kann die Fähigkeit des Fahrers aufrecht erhalten, alle Funktionen auf der Fahrerseite des Fahrzeugs selbst bei einem Ausrüstungsfehler zu bedienen, während die Beifahrerfunktionen deaktiviert sein können. Die Nur-Beifahrer-Konfiguration 304, die Beifahrer-Sperrkonfiguration 306 und die Fahrer-Standardkonfiguration 308 basieren darauf, dass das Signal in den Beifahrersitz gekoppelt wird.

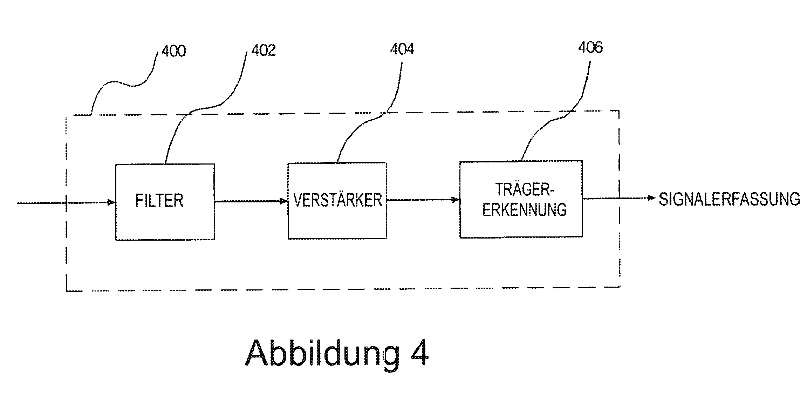

Unter Bezugnahme auf Abbildung 4 beinhaltet eine beispielhafte elektronische Signalempfängerschaltung 400, die zur Erkennung des Vorhandenseins des Signals an dem Bedienelement 112 verwendet wird, einen Filter 402 zur Beseitigung oder Minderung der Störanfälligkeit des Signalempfängers 400, einen Verstärker 404, und eine Vorrichtung zur Trägererkennung 406. Beispielweise kann es sich bei dem Signal um eine 50 - 150 kHz Sinuswelle handeln, die relativ einfach zu erkennen und durch die eine Störung anderer Fahrzeugmodule oder des Radioempfangs unwahrscheinlich ist. Dementsprechend ist der Filter 402 ein Tiefpass- oder Bandpassfilter, der so eingestellt ist, dass er die Trägerfrequenz durchlässt und (bei einem Tiefpassfilter) höhere oder (bei einem Bandpassfilter) höhere und tiefere Frequenzen entfernt. Um Probleme mit elektromagnetischen Störungen anderer Fahrzeugsysteme zu vermeiden, kann das in den Sitz gekoppelte Signal eine niedrige Wechselspannung von typischerweise weniger als 1 Volt verwenden. Dementsprechend sollte der Signalempfänger 400 in der Lage sein, sehr schwache Signale von weniger als 0,1 Volt zu erkennen. Der Verstärker 404 wird als Teil des Signalempfängers 400 eingesetzt, um die notwendige Empfindlichkeit gegenüber schwachen Signalen zur Verfügung zu stellen. Der Trägererkennungsblock 406 wird verwendet, um einen binären Signalerfassungsausgang für die weitere Verarbeitung zu erzeugen. Für die Trägererkennung kann ein integrierter Frequenzdecoderschaltkreis verwendet werden.

Während die Signalempfängerschaltung 400 eine einfache und kostengünstige Ausführungsform darstellt, sind mehrere Modifikationen an dieser Schaltung möglich. Zum Beispiel kann das Signal so moduliert werden, dass das Risiko einer falschen Erkennung gemindert wird. In diesem Fall prüft der Signalempfänger nicht nur in Hinsicht auf das Vorhandensein eines Trägers, sondern auch hinsichtlich einer richtigen Modulation. Die Ausgabe der Trägererkennung kann auch in Form eines Analogwertes erfolgen, der die Signalstärken repräsentiert, so dass die nachgeschaltete Logik basierend auf der Stärke der empfangenen Signale zwischen gültigen und ungültigen Signalen unterscheiden kann.

Die leitfähige Fläche 106 in dem Sitz 104, die für die kapazitive Kopplung zwischen dem Signalgenerator 108 und dem Bediener verwendet wird, kann als eine flexible Platte oder ein leitfähiges Netzgewebe ausgeführt sein, direkt unter der Sitzfläche angeordnet. Ist das Fahrzeug mit heizbaren Sitzen ausgestattet, so kann zur Kopplung des Signals mit dem Bediener die Sitzheizungsmatte verwendet werden. In diesem Fall kann jedoch der niedrige Widerstand der Heizungsmatte, der in der Regel weniger als 10 Ohm beträgt, dazu führen, dass die Kopplung eines ausreichend starken Signals in den Bediener erschwert wird. Während eine Wechselspannung von weniger als 1 Volt gegen die Fahrzeugmasse ausreicht, um von dem Signalempfänger 116 an dem Bedienelement 112 erkannt zu werden, würde eine solche Spannung relativ hohe Stromstärken von mehr als 100 mA in der Sitzheizungsmatte hervorrufen, was zu unerwünschten Verlusten führen würde (wenn die Sitzheizung ausgeschaltet wird), teure Bauteile in dem Signalgenerator 108 erforderlich machen würde, und möglicherweise Probleme mit elektromagnetischen Störungen anderer elektronischer Geräte verursachen könnte. Wenn die Sitzheizung eingeschaltet wird, könnte der sogar noch niedrigere Widerstand zwischen der mit der Batterie verbundenen Seite der Sitzheizungsmatte und der Fahrzeugbatterie, die selbst nur einen sehr niedrigen Widerstand aufweist, zusätzliche Probleme aufwerfen.

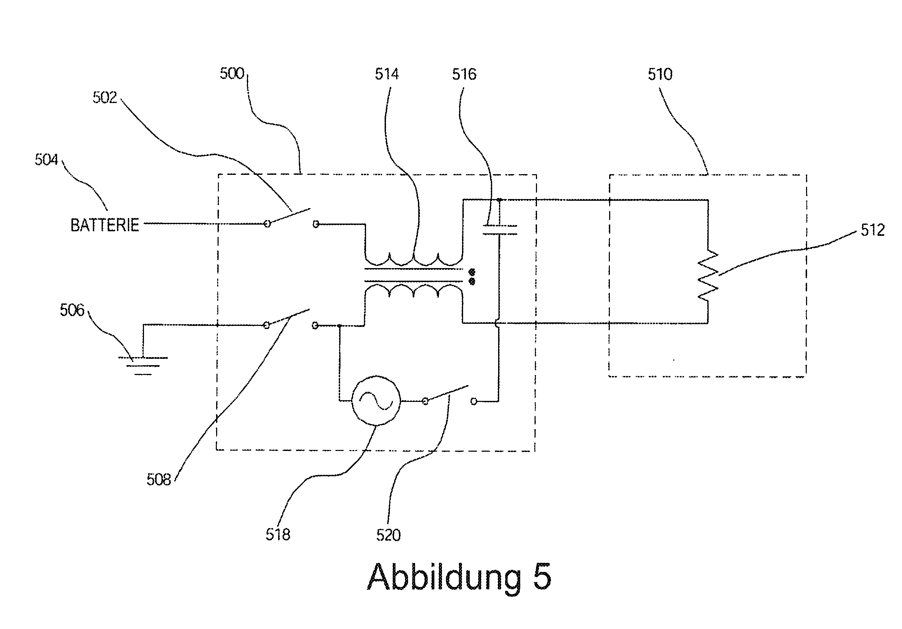

Unter Bezugnahme auf Abbildung 5 wird der niedrige Widerstand der Sitzheizungsmatte überwunden, während die Heizungsmatte auch zur Kopplung eines Signals mit dem sitzenden Bediener verwendet wird. Eine beispielhafte Sitzheizungsmatte 510 beinhaltet ein resistives Heizelement 512 verkabelt mit einem Sitzkontrollmodul 500. Das Kontrollmodul 500 enthält die Schalter 502 und 508, welche die Sitzheizungsmatte 510 jeweils mit einer Batterie 504 und der Fahrzeugmasse 506 verbinden. Obwohl die Schalter 502 und 508 als einfache Schalter dargestellt sind, sollte darauf hingewiesen werden, dass es sich bei den Schaltern 502 und 508 typischerweise um mikroprozessorgesteuerte Halbleiterschalter oder Relais handelt. Um die Sitzheizungsmatte 510 zur Kopplung des Signals von einem Signalgenerator 518 in den Bediener zu verwenden, ist eine Drossel zur Gleichtaktunterdrückung 514 mit der Sitzheizungsmatte 510 in Serie geschaltet. Die Induktivität einer Drossel zur Gleichtaktunterdrückung 514 wird so gewählt, dass ihre Wechselstromimpedanz auf der bevorzugten Signalfrequenz von 50 - 150 kHz ausreichend hoch ist, um einen Betrieb des Signalgenerators 518 bei der gewünschten Wechselspannung zu ermöglichen. Unter Verwendung der Drossel zur Gleichtaktunterdrückung 514 kann das gesamte Potenzial der Sitzheizungsmatte relativ zur Fahrzeugmasse 506 alternieren, während gleichzeitig der resultierende Wechselstrom aufgrund der relativ hohen Impedanz der Drossel zur Gleichtaktunterdrückung 514 auf der Betriebsfrequenz niedrig gehalten wird.

Der Signalgenerator 518 ist über einen Kondensator 516 mit der Sitzheizungsmatte verbunden, so dass der Signalgenerator 518 nicht durch das Ein- oder Ausschalten der Sitzheizung und das Schließen und Öffnen der Schalter 502 und 508 beeinflusst wird. Der Schalter 520 kann so implementiert werden, dass der Signalgenerator 518 durch weitere Kriterien aktiviert werden kann. Wenn sich zum Beispiel die Sitzheizungsmatte 510 innerhalb des Beifahrersitzes befindet, lässt der Schalter 520 eine Aktivierung des Signalgenerators 518 nur dann zu, wenn erkannt wird, dass der Beifahrersitz durch einen Insassen belegt ist. Jedoch ist es nicht notwendig, dass der Schalter 520 physikalisch tatsächlich vorhanden ist, da der Effekt von Schalter 520 auch durch eine mikroprozessorgesteuerte Aktivierung und Deaktivierung des Signalgenerators 518 erzielt werden kann, basierend auf einer fest verdrahteten oder seriellen Dateneingabe, z. B. durch einen im Sitz befindlichen Sensor zur Insassenerkennung.

In einer Ausführungsform wird das allgemeine System aus Abbildung 2 auf ein Dual-View-Display angewendet, das zwei Bilder zeigt und wobei zum Beispiel nur jeweils eines der beiden Bilder sichtbar ist, wenn das Display aus bestimmten Blickwinkeln betrachtet wird. Dual-View-Displays werden in Fahrzeugen verwendet, um es dem Fahrer und dem vorderen Beifahrer zu ermöglichen, verschiedene Bilder auf ein und demselben Display zu sehen, z. B. um dem Fahrer Navigationsinformationen anzuzeigen, während der Beifahrer einen Film von einer DVD betrachtet. Während solche Displays erweiterte Infotainment-Funktionen ermöglichen, ist die Vielseitigkeit dieser Displays eingeschränkt, wenn sie in Verbindung mit einem herkömmlichen Touchscreen verwendet werden. Obwohl es möglich ist, dass eine Benutzerschnittstelle Schaltflächen enthält, die jeweils dem Fahrer und dem Beifahrer angezeigt werden und die so auf dem Bildschirm platziert sind, dass sie jeweils nur für den Fahrer bzw. den Beifahrer sichtbar sind, kann sich dieser Ansatz bei einer Benutzerschnittstelle, in die eine Vielzahl von Funktionen für den Fahrer und/oder Beifahrer integriert sind, als weniger praktisch erweisen. Dementsprechend kann der Touchscreen viele separate Funktionen sowohl für den Fahrer als auch den Beifahrer in einer einzelnen Schnittstelle beinhalten, indem einem bestimmten Bediener eine Bedienung per Berührung zugewiesen wird, wenn diese auf das Bedienelement, z. B. auf einen Touchscreen, angewendet wird.

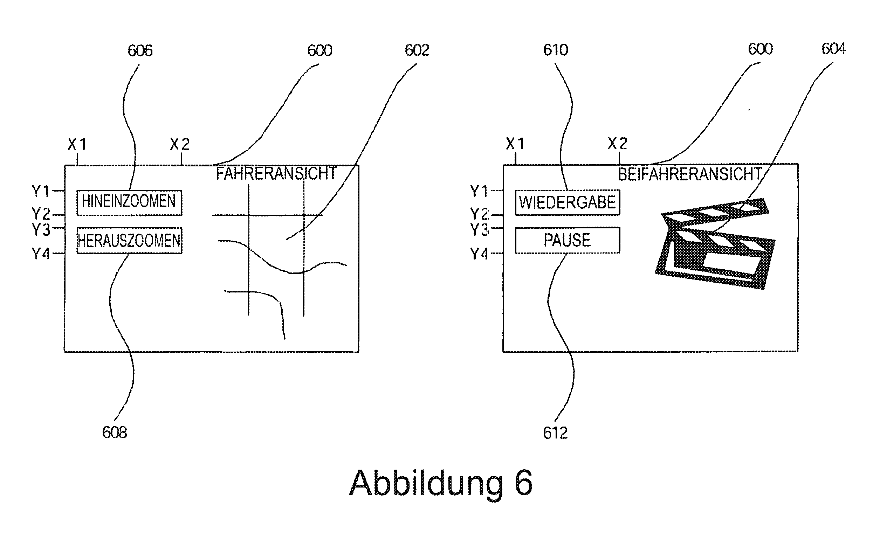

Unter Bezugnahme auf Abbildung 6 beinhaltet ein beispielhaftes Dual-View-Touchscreen-Display 600 eine Beifahreransicht und eine Fahreransicht. Während dem Fahrer bei Betrachtung des Displays 600 eine Navigationskarte 602 angezeigt werden kann, ist dem Beifahrer bei Betrachtung des selben Displays 600 das Anschauen eines Films von einer DVD 604 möglich. Zwischen den Koordinaten Xl, Y1 bis X2, Y2 ist in einer Fahreransicht eine Schaltfläche 606 platziert, die nur aus Richtung des Fahrersitzes sichtbar ist. Bei der Schaltfläche 606 handelt es sich um eine Schaltfläche zum Hineinzoomen, über die bei Berührung in die Kartenansicht hinein gezoomt wird. Zwischen den Koordinaten XI, Y1 bis X2, Y2 ist außerdem eine Schaltfläche 610 platziert, die nur aus Richtung des Beifahrersitzes sichtbar ist und über die bei Berührung der Film abgespielt wird. In gleicher Weise ist zwischen den Koordinaten XI, Y3 bis X2, Y4 eine Schaltfläche 608 platziert, über die der Fahrer aus der Karte herauszoomen kann, und über die der Beifahrer die Filmwiedergabe anhalten kann. Um die Erkennung der Touchscreen-Eingaben durch den Beifahrer oder den Fahrer zu unterstützen, wird ein Signal erzeugt und mit dem Beifahrersitz gekoppelt, das anschließend über den im Beifahrersitz befindlichen Bediener an das Touchscreen-Display geleitet wird.

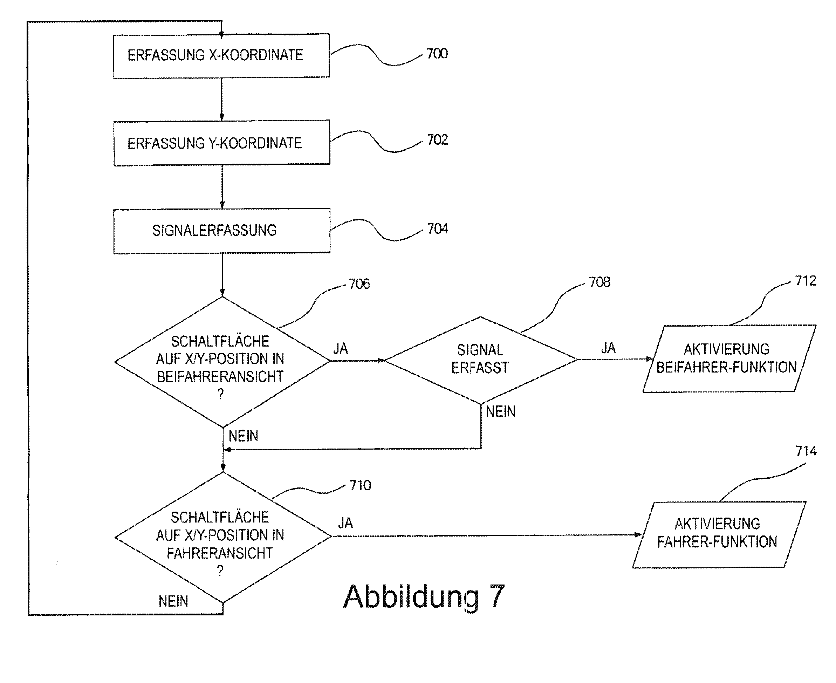

Unter Bezugnahme auf Abbildung 7 wird eine beispielhafte Methode für die Zuordnung einer Bedienung per Berührung zu einem bestimmten Bediener auf das Bedienelement einer Benutzerschnittstelle in Form eines Dual-View-Touchscreens angewendet. Wird eine Bedienung per Berührung erkannt, werden die Stelle der Berührungseingabe und das Vorhandensein des Signals auf dem Touchscreen bestimmt, z. B. durch einen Signalempfänger und eine Bewertungseinrichtung des Bedienzustands. Insbesondere werden die horizontale Position der Berührungseingabe (700), die vertikale Position der Berührungseingabe (702), und auch das Vorhandensein des Signals (704) erfasst. Als nächstes stellt die Bewertungseinrichtung des Bedienzustands fest, ob sich die Schaltfläche, die der Berührungseingabe entspricht, auf der erfassten Position in derjenigen Ansicht befindet, die nur von dem Beifahrersitz (706) aus sichtbar ist. Stellt der Signalempfänger außerdem fest, dass das Signal, z. B. von dem Signalgenerator (708), vorhanden ist, so wird die entsprechende Beifahrerfunktion (712) aktiviert. Wurde das Signal nicht erkannt oder ist für den Beifahrer an der erfassten Berührungsstelle keine Schaltfläche sichtbar, so wird der Prozess mit dem Prozessschritt 710 fortgesetzt. In Schritt 710 stellt die Bewertungseinrichtung des Bedienzustands fest, ob für den Fahrer an der erfassten Berührungsstelle eine Schaltfläche sichtbar ist. Ist die Schaltfläche für den Fahrer an der erfassten Stelle sichtbar, wird in Schritt 714 die entsprechende Fahrerfunktion aktiviert. Ist die Schaltfläche auch für den Fahrer nicht sichtbar, wird die Berührungseingabe ignoriert und der Prozess bei Erkennung einer neuen Eingabe wiederholt. Alternativ kann der Benutzer, z. B. in Form eines hörbaren Fehlertons, auch darauf hingewiesen werden, dass eine fehlerhafte Berührungseingabe erfasst wurde. Als Alternative oder zusätzlich kann zwischen Schritt 710 und Schritt 715 ein Signalerfassungsschritt, z. B. ähnlich zu Schritt 708, zur Verfügung gestellt werden, um sicherzustellen, dass ein fehlerhaftes Signal und/oder eine fehlerhafte Berührungsstelle nicht in falscher Weise dem Fahrer zugeordnet werden, und/oder um diskrete Signale zu erkennen, wenn für jeden Bediener einzigartige Signale erzeugt werden.

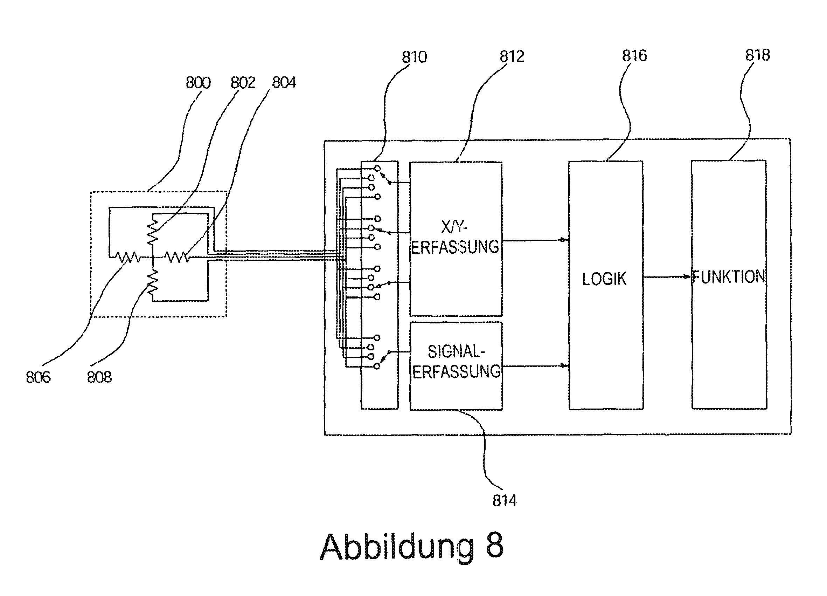

Unter Bezugnahme auf Abbildung 8 ist eine beispielhafte Hardware und Logik dargestellt, die in die Erkennung der Stelle einer Berührungseingabe und/oder die Erfassung des durch einen beispielhaften resistiven Vierdraht-Touchscreen 800 empfangenen Signals involviert ist. Ein typischer resistiver Vierdraht-Touchscreen 800 beinhaltet zwei durch einen dünnen Zwischenraum voneinander getrennte resistive Lagen. Wenn ein Objekt, wie zum Beispiel die Fingerspitze eines Benutzers, die Oberfläche des Touchscreens berührt, werden die resistiven Lagen an einer bestimmten Stelle miteinander verbunden, wodurch in wirksamer Weise zwei Spannungsteiler auf der X-Achse, und zwei Spannungsteiler auf der Y-Achse erzeugt werden. Der Gesamtwiderstand der X-Achse wird in zwei Widerstände 806 und 804 aufgeteilt, während der Gesamtwiderstand der Y-Achse in die Widerstände 802 and 808 aufgeteilt wird. Der resistive Vierdraht-Touchscreen 800 ist mit einer Schaltmatrix 810 verbunden, welche eine Referenzspannung entweder an die horizontale oder die vertikale Achse zur Messung der Position der Berührung anlegt. Ein x/y Erkennungsblock 812 legt die Referenzspannung an und wertet den Spannungsteiler aus. Gleichzeitig oder darauf folgend wird das Vorhandensein eines Signals an dem Touchscreen durch den Signalerfassungsblock 814 bewertet. Die Ausgaben sowohl der Erfassung der Berührungsstelle (x/y) 812 als auch der Signalerfassung 814 sind Eingaben für die Logik 816, die basierend auf der Stelle der Berührungseingabe und dem Vorhandensein (oder Nichtvorhandensein) des Signals selektiv Funktionen 818 aktiviert. Der oben in Verbindung mit Abbildung 7 beschriebene Prozess kann durch die in Verbindung mit Abbildung 8 dargestellte und beschriebene Hardware und Logik implementiert werden.

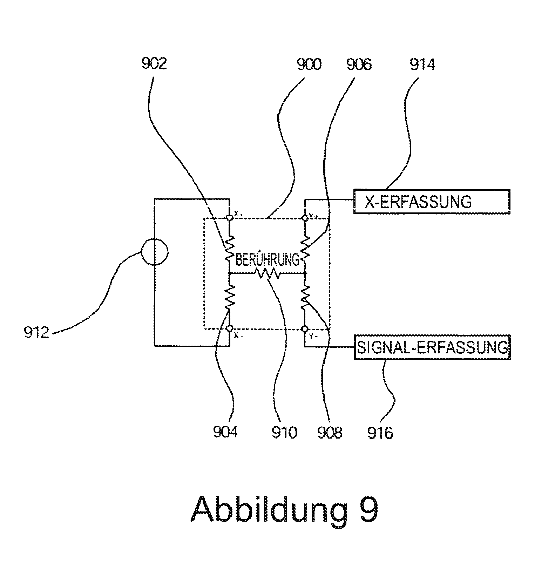

Unter Bezugnahme auf Abbildung 9 ist eine schematische Ansicht der Touchscreen-Auswertung während der Erfassung der X-Position und während der Erkennung des Signals dargestellt. In diesem Fall wird eine Referenzspannung 912 entlang der X-Achse angelegt. Eine Berührungseingabe auf dem Bildschirm teilt den Gesamtwiderstand der X-Achse in zwei Widerstände 902 und 904 auf. An der Berührungsstelle wird eine resistive Verbindung zwischen den zwei ansonsten voneinander getrennten Lagen hergestellt, hier dargestellt durch den Berührungswiderstand 910. Die Y-Achse wird in die Widerstände 906 und 908 unterteilt. Während die Position der Berührungseingabe durch die Widerstände 910 und 906 in der Erkennungsschaltung 914 bestimmt werden kann, kann gleichzeitig das Vorhandensein eines Signals am Signalempfänger 916 erfasst werden. In diesem Fall weist der Eingang des Signalempfängers 916 eine sehr hohe Impedanz auf, so dass keine Störungen bei der Bestimmung der X-Position auftreten. Die einzelnen Schritte der Bestimmung der Berührungsstelle (X- und/oder Y-Position) und/oder der Erfassung des Signals können jedoch nacheinander und/oder gleichzeitig durchgeführt werden.

Obwohl die vorangegangenen beispielhaften Ausführungsformen in Verbindung mit einem Dual-View-Touchscreen beschrieben worden sind, können die vorangegangenen Prozesse auch auf verschiedene andere Ausrüstungsteile zur Implementierung verschiedener Bedienelemente angewendet werden. Zum Beispiel kann die Ausrüstung ein oder mehrere Teile beinhalten, wie etwa ein Radio, ein Navigationssystem, ein Entertainmentsystem für die Rücksitze, eine Leseleuchte, elektrische Fensterheber, ein Klima- und Lüftungssystem, ein Navigationssystem, und/oder ein Telefon. Dementsprechend können sich das Bedienelement oder die Bedienelemente auf den Empfang und die Wiedergabe einer Radiosendung, die Beleuchtung von Bereichen des Innenraums eines Fahrzeugs, das Senken und Heben von Scheiben, das Heizen oder Kühlen, das Auswählen eines Reiseziels, das Bereitstellen von Routenanweisungen, und/oder das Durchführen von Telefongesprächen beziehen. Eine oder mehrere der Bedienelemente können von einem Bediener durch Bedienelemente wie zum Beispiel Schalter, Knöpfe, Tasten, Drehschalter, Eingabevorrichtungen und/oder Touchscreens bedient werden.

Obwohl die vorangegangenen Ausführungsformen in Verbindung mit einem Signalgenerator beschrieben worden sind, der operativ mit einer leitfähigen Fläche, wie etwa innerhalb eines Fahrersitzes oder eines vorderen Beifahrersitzes neben dem Fahrersitz, gekoppelt ist, können auch ein oder mehrere Signalgeneratoren innerhalb eines Fahrzeugsystems implementiert werden. Zum Beispiel kann jeder Beifahrersitz einen speziell zugeordneten Signalgenerator beinhalten, der für jeden Beifahrer ein diskretes und erkennbares Signal erzeugt. Als Alternative oder zusätzlich kann ein einzelner Signalgenerator ein Signal oder mehrere Signale erzeugen, die mehreren Beifahrern innerhalb eines Fahrzeugs zugeordnet werden können. Zum Beispiel kann ein einzelner Signalgenerator ein Signal erzeugen, das an jeden einzelnen Beifahrersitz gesendet wird und dann modifiziert werden kann, zum Beispiel mittels eines Bandpassfilters, der in jeden Fahrzeugsitz eingebaut ist, um für jeden Beifahrer ein diskretes und erkennbares Signal zu erzeugen. Anschließend können ein einzelner Signalempfänger, eine einzelne Bewertungseinrichtung des Bedienzustands, und/oder ein einzelnes Prozesssteuergerät zur Erkennung mehrerer Signale und/oder des Nichtvorhandenseins von Signalen verwendet werden, um auf diese Weise die multifunktionale Fähigkeit eines oder mehrerer Bedienelemente für Ausrüstung innerhalb eines Fahrzeugs oder eines stationären Systems zusätzlich zu erweitern. Die Ausrüstung kann ein oder mehrere Fahrzeugssysteme enthalten und/oder auf andere Anwendungen angewendet werden, wie zum Beispiel stationäre Terminals oder Systeme, die mit hoher Wahrscheinlichkeit von mehreren Benutzern verwendet werden und/oder die ein Bedienelement für mehrere Funktionen zur Verfügung stellen. Das Bedienelement kann eine oder mehrere Funktionen zur Steuerung verschiedener Ausrüstungsoperationen implementieren, wie zum Beispiel die Einstellung oder Überwachung von Ausrüstungsfunktionen oder -operationen.

Obwohl oben detaillierte Ausführungsformen und Implementierungen beschrieben worden sind, sollte es offensichtlich sein, dass verschiedene Modifikationen durchgeführt werden können, ohne vom Sinn und Umfang der vorliegenden Erfindung abzuweichen.

## Patentansprüche

1. System zur Bedienung von Fahrzeugausrüstung (120), bestehend aus:
einem Signalgenerator (108; 518);
zumindest einer leitfähigen Fläche (106; 510), die operativ mit dem Signalgenerator (108; 518) verbunden ist; und
einer Touchscreen-Vorrichtung, wobei die Touchscreen-Vorrichtung
einen Touchscreen (112), insbesondere einen Dual-View-Touchscreen (600); eine Bewertungseinrichtung (114) des Bedienzustands, die operativ mit dem Touchscreen (112; 600) verbunden ist;
einen Signalempfänger (116), der operativ mit dem Touchscreen (112; 600) verbunden ist; und
ein Prozesssteuergerät (118) beinhaltet, das so konfiguriert ist,
dass es eine Ausgabe von dem Signalempfänger (116) und eine Ausgabe der Bewertungseinrichtung (114) des Bedienzustands erkennt,
dass basierend auf dem erkannten Signal ein erster Systembenutzer (100) der Ausgabe der Bewertungseinrichtung (114) des Bedienzustands zugeordnet wird
dass es basierend auf einem erkannten Signal von dem Signalgenerator (108; 518) eine erste Funktion (122) aktiviert, und dass es eine zweite Funktion aktiviert, wenn das Signal auf einem erkannten Signal von einer zweiten leitfähigen Fläche basiert
**dadurch gekennzeichnet, dass**
das Prozesssteuergerät (118) weiter so konfiguriert ist
dass der Ausgabe der Bewertungseinrichtung (114) des Bedienzustands ein anderer Systembenutzer zugeordnet wird, wenn das Signal des Signalgenerators (108; 518) von dem Signalempfänger (116) nicht erkannt wird und
dass es die zweite Funktion auch aktiviert, wenn das Signal von dem Signalgenerator (108; 518) nicht erkannt wird.

2. System gemäß Anspruch 1, wobei die leitfähige Fläche (106; 510) innerhalb eines Passagiersitzes (104) innerhalb eines Fahrzeugs, insbesondere eines Fahrersitzes oder Beifahrersitzes, zur Verfügung gestellt wird.

3. System gemäß Anspruch 1, weiterhin bestehend aus einem operativ mit dem Signalgenerator (108; 518) gekoppelten Sitz (104), wobei der Signalempfänger (116) für den Empfang eines Signals konfiguriert ist, das von dem Signalgenerator (108; 518) durch die leitfähige Fläche (106; 510) und einen Benutzer (100) an den Touchscreen (112; 600) übertragen wird.

4. System gemäß Anspruch 3, wobei der Signalempfänger (116) so konfiguriert ist, dass er das Signal erkennt, das durch einen in dem Sitz (104) befindlichen Bediener (100) geleitet wird.

5. System gemäß Anspruch 1, wobei der Signalgenerator (108; 518) ein schlüsselloses Startgerät ist, und das Prozesssteuergerät (118) so konfiguriert ist, dass es einen Benutzer (100) basierend auf dem Signal von dem schlüssellosen Startgerät erkennt.

6. System gemäß Anspruch 1, wobei die Touchscreen-Vorrichtung eine Dual-View-Touchscreen-Vorrichtung (600) ist, die in der Lage ist, verschiedenen Benutzern (100) gleichzeitig verschiedene Bilder (602, 604) anzuzeigen.

7. System gemäß Anspruch 1, wobei die leitfähige Fläche (106) eine Sitzheizungsmatte (510) innerhalb eines Fahrzeugsitzes (104) ist, und der Signalgenerator (108; 518) kapazitiv, resistiv oder elektrostatisch mit der Sitzheizungsmatte (510) gekoppelt ist.

8. Verfahren zur Bedienung von Fahrzeugausrüstung (120), das Verfahren bestehend aus:
der Bewertung eines Bedienzustands eines Bedienelements (112; 600) einer Ausrüstung (120);
der Erkennung, ob ein Signal, das einem Bediener (100) des Bedienelements (112; 600) einer Ausrüstung (120) zugeordnet ist, vorhanden ist;
der Zuordnung des bewerteten Bedienzustands zu einem ersten Bediener (100) der Ausrüstung (120), wenn das Signal vorhanden ist; und
basierend auf dem bewerteten Bedienzustand:
der Aktivierung einer ersten Ausrüstungsfunktion (122), wenn das Signal von dem Bedienelement (112; 600) einer Ausrüstung (120) vorhanden ist;
**dadurch gekennzeichnet, dass**
das Verfahren weiter besteht aus der Zuordnung des bewerteten Bedienzustands zu einem zweiten Bediener des Bedienelements (112; 600) einer Ausrüstung (120), wenn das Signal nicht vorhanden ist; und
basierend auf dem bewerteten Bedienzustand:
der Aktivierung einer zweiten Ausrüstungsfunktion, wenn das Signal nicht vorhanden ist.

9. Verfahren gemäß Anspruch 8, weiterhin bestehend aus:
der Übertragung eines Signals von einem Signalgenerator (108; 518), über einen Bediener (100), an eine leitfähige Fläche (606, 608, 610, 612) des Bedienelements (112; 600) einer Ausrüstung (120), wobei das Signal ein kapazitiv, resistiv oder elektrostatisch gekoppeltes, von dem Signalgenerator (108; 518) erzeugtes Signal ist.

10. Verfahren gemäß Anspruch 8, wobei die Bewertung des Bedienzustands die Bestimmung der Position einer Eingabe an das Bedienelement (112; 600) einer Ausrüstung (120) beinhaltet.

11. Verfahren gemäß Anspruch 10, weiterhin bestehend aus:
der Zuordnung der Eingabe an das Bedienelement (112; 600) einer Ausrüstung (120), wenn das Signal vorhanden ist, zu einem ersten Insassen (100) eines Fahrzeugs; und der Zuordnung der Eingabe an das Bedienelement (112; 600) einer Ausrüstung (120), wenn das Signal nicht vorhanden ist, zu einem zweiten Insassen eines Fahrzeugs.

12. Verfahren gemäß Anspruch 8, weiterhin bestehend aus:
der Zuordnung der Ausrüstungsbedienung (112; 600) zu einem spezifischen Bediener (100) unter mehreren Bedienern basierend auf der Erkennung des Signals.

13. Verfahren gemäß Anspruch 12, weiterhin bestehend aus der Anzeige mittels eines Sensors (106; 510) zur Insassenerkennung, ob sich ein Fahrer (100) oder ein vorderer Beifahrer auf einem Vordersitz (104) eines Kraftfahrzeugs befinden.

14. Verfahren gemäß Anspruch 13, wobei das Signal operativ mit dem vorderen Beifahrersitz des Kraftfahrzeugs gekoppelt ist, wenn der Sensor zur Insassenerkennung anzeigt, dass der vordere Beifahrersitz besetzt ist, und wobei das Signal mit dem vorderen Beifahrersitz nicht gekoppelt ist, wenn der Sensor zur Insassenerkennung anzeigt, dass der vordere Beifahrersitz nicht besetzt ist.

15. Verfahren gemäß Anspruch 8, weiterhin bestehend aus:
der Anzeige einer Schaltfläche (610, 612), die aus dem Blickwinkel eines Beifahrers sichtbar ist, auf einem Dual-View-Touchscreen (600) in einem Fahrzeug; und
der Anzeige einer Schaltfläche (606, 608), die aus dem Blickwinkel eines Fahrers (100) sichtbar ist, auf dem Dual-View-Touchscreen (600) in dem Fahrzeug, wobei die Aktivierung der ersten Ausrüstungsfunktion die Aktivierung einer Funktion beinhaltet, die einem Passagier in dem Fahrzeug zugeordnet ist, wenn der Touchscreen (600) an einer Stelle berührt wird, die der aus dem Blickwinkel des Passagiers sichtbaren Schaltfläche (608, 610) entspricht und wenn das Signal vorhanden ist, und wobei die Aktivierung der zweiten Ausrüstungsfunktion (122) die Aktivierung einer Funktion beinhaltet, die einem Fahrer (100) in dem Fahrzeug zugeordnet ist, wenn der Touchscreen (600) an einer Stelle berührt wird, die der aus dem Blickwinkel des Fahrers (100) sichtbaren Schaltfläche (606, 608) entspricht und wenn das Signal nicht vorhanden ist.

16. Verfahren gemäß Anspruch 15, weiterhin bestehend aus der Deaktivierung der zweiten Ausrüstungsfunktion (122), wenn das Signal nicht vorhanden und das Fahrzeug in Bewegung ist.

## Claims

1. System for the operation of vehicle equipment (120), comprising:
A signal generator (108; 518);
At least a conductive surface (106; 510) functionally connected with the signal generator (108; 518); and
A touch-screen device, wherein the touch-screen device comprises
A touch-screen (112), and notably a dual-view touch-screen (600); an evaluation device (114) for the operating condition, being functionally connected with the touch-screen (112; 600);
A signal receiver (116) being functionally connected with the touch-screen (112; 600); and
A process control unit (118), which is configured
So that it recognizes an output from the signal receiver (116) and an output from the evaluation device (114) for the operating condition,
So that based on the recognized signal, a first system user (100) is assigned to the output of the evaluation device (114) for the operating condition
So that based on a recognized signal by the signal generator (108; 518), it activates a first function (122); and
That it activates a second function, when the signal is based in a recognized signal by a second conductive surface,
**Characterized in that**
The process control unit (118) is furthermore configured so
That a different system user is assigned to the output of the evaluation device (114) for the operating condition, if the signal of the signal generator (108; 518) is not recognized by the signal receiver (116), and
That it activates the second function also if the signal is not recognized by the signal generator (108; 518).

2. System according to claim 1, wherein the conductive surface (106; 510) is provided inside a passenger seat (104) in a vehicle, particularly a driver seat or a front passenger seat.

3. System according to claim 1, furthermore comprising a seat (104) functionally coupled with the signal generator (108; 518), wherein the signal receiver (116) is configured for the reception of a signal being transmitted from the signal generator (108; 518) to the touch-screen (112; 600) by means of the conductive surface (106; 510) and a user (100).

4. System according to claim 3, wherein the signal receiver (116) is configured so that it recognizes the signal conducted through an operator (100) present in the seat (104).

5. System according to claim 1, wherein the signal generator (108; 518) is a keyless starting device and the process control device (118) is configured so that it recognizes a user (100) on the basis of the signal emitted by the keyless starting device.

6. System according to claim 1, wherein the touch-screen device is a dual-view touch-screen device (600) being capable of displaying different images (602; 604) to different users (100) at the same time.

7. System according to claim 1, wherein the conductive surface (106) is a seat heater mat (510) inside a vehicle seat (104) and wherein the signal generator (108; 518) is coupled with the seat heater mat (510) either in a capacitive, resistive or electrostatic manner.

8. Procedure for the operation of vehicle equipment (120), the procedure comprising:
The evaluation of an operating condition of an operating element (112; 600) of an equipment (120);
The recognition whether a signal assigned to an operator (100) of the operating element (112; 600) of the equipment (120) is present;
The assignment of the evaluated operating condition to a first operator (100) of the equipment (120), when the signal is present; and
Based on the evaluated operating condition:
The activation of a first equipment function (122), when the signal of the operating element (112; 600) of an equipment (120) is present;
**Characterized in that**
The procedure furthermore comprises the assignment of the evaluated operating condition to a second operator of the operating element (112; 600) of an equipment (120), if the signal is not present; and
Based on the evaluated operating condition:
The activation of a second equipment function, if the signal is not present.

9. Procedure according to claim 8, furthermore comprising:
The transmission of a signal from a signal generator (108; 518) by means of an operator (100) to a conductive surface (606, 608, 610, 612) of the operating element (112; 600) of an equipment (120), wherein the signal is a signal generated by the signal generator (108; 158) in a capacitive, resistive or electrostatic manner.

10. Procedure according to claim 8, wherein the evaluation of the operating condition comprises the determination of the position of an entry into the operating element (112; 600) of an equipment (120).

11. Procedure according to claim 10, furthermore comprising:
The assignment of the entry into the operating element (112; 600) of an equipment (120), when the signal is present, to a first vehicle occupant (100); and the assignment of the entry into the operating element (112; 600) of an equipment (120), when the signal is not present, to a second vehicle occupant.

12. Procedure according to claim 8, furthermore comprising:
The assignment of the equipment operating element (112; 600) to a specific operator (100) amongst several operators, based on the recognition of the signal.

13. Procedure according to claim 12, furthermore comprising the indication by means of a sensor (106; 510) for passenger recognition, whether a driver (100) or a front seat passenger is present on a front seat (104) of a motor vehicle.

14. Procedure according to claim 13, wherein the signal is functionally coupled with the front passenger seat of the motor vehicle, when the sensor for passenger recognition indicates, that the front passenger seat is occupied, and wherein the signal is not coupled with the front passenger seat, when the sensor for passenger recognition indicates, that the front passenger seat is not occupied.

15. Procedure according to claim 8, furthermore comprising:
The display of a push button (610; 612), visible from the angle of view of a passenger, on a dual-view touch-screen (600) in a vehicle; and the display of a push button (606, 608) visible from the angle of view of a driver (100), on a dual-view touch-screen (600) in the vehicle, wherein the activation of the first equipment function comprises the activation of a function assigned to a passenger in the vehicle, when the touch-screen (600) is touched in a place corresponding to the push button (606, 608) visible from the angle of view of the passenger, and when the signal is present, and wherein the activation of the second equipment function (122) comprises the activation of a function assigned to a driver (100) in the vehicle, when the touch-screen (600) is touched in a place corresponding to the push button (606, 608) visible from the angle of view of the driver (10), and when the signal is not present.

16. Procedure according to claim 15, furthermore comprising the deactivation of the second equipment function (122) when the signal is not present and the vehicle is in motion.

## Revendications

1. Système pour commander l'équipement véhicule (120) qui consiste en :
un générateur de signaux (108; 518),
au moins une surface conductrice (106; 510) qui est opérationnellement reliée au générateur de signaux (108; 518) et
un dispositif à écran tactile, le dispositif à écran tactile consistant en
un écran tactile (112), surtout un écran tactile à double vision (600), un dispositif d'évaluation (114) de l'état de commande qui est opérationnellement relié à l'écran tactile (112; 600), un récepteur de signaux (116) qui est opérationnellement relié à l'écran tactile (112; 600), et
un calculateur processus (118) qui est configuré de telle manière
qu'il reconnaisse une sortie du récepteur de signaux (116) et une sortie du dispositif d'évaluation (114) de l'état de commande,
que sur la base du signal reconnu un premier utilisateur du système (100) soit attribué à la sortie du dispositif d'évaluation (114) de l'état de commande,
que sur la base d'un signal reconnu du générateur de signaux (108; 518) une première fonction (122) soit activée et
qu'il active une deuxième fonction lorsque le signal se base sur un signal reconnu par une deuxième surface conductrice,
**caractérisé en ce que**
le calculateur processus (118) reste configuré de telle manière
qu'à la sortie du dispositif d'évaluation (114) de l'état de commande un autre utilisateur du système soit attribué lorsque le signal du générateur de signaux (108; 518) n'est pas reconnu par le récepteur de signaux (116),
qu'il active également la deuxième fonction lorsque le signal n'est pas reconnu par le générateur de signaux (108; 518).

2. Système selon la revendication 1, la surface conductrice (106; 510) étant mise à disposition dans un siège passager (104) à l'intérieur d'un véhicule, surtout un siège conducteur ou passager.

3. Système selon la revendication 1, qui consiste en outre en un siège (104) accouplé opérationnellement au générateur de signaux (108; 518), le récepteur de signaux (116) étant configuré à la réception d'un signal qui sera transmis par un générateur de signaux (108; 518) par la surface conductrice (106; 510) et un utilisateur (100) à l'écran tactile (112; 600).

4. Système selon la revendication 3, le récepteur de signaux (116) étant configuré de telle manière qu'il reconnaisse le signal qui sera conduit à travers un opérateur (100) qui se trouve dans le siège (104).

5. Système selon la revendication 1, le générateur de signaux (108; 518) étant un démarreur sans clef et le calculateur processus (118) étant configuré de telle manière qu'il reconnaisse un opérateur (100) sur la base du signal du démarreur sans clef.

6. Système selon la revendication 1, le dispositif à écran tactile étant un dispositif à écran tactile à double vision (600) qui est capable d'afficher de différentes images (602, 604) aux utilisateurs différents (100) en même temps.

7. Système selon la revendication 1, la surface conductrice (106) étant la natte du siège chauffant (510) à l'intérieur du siège automobile (103) et le générateur de signaux (108; 518) est accouplé de manière capacitive, résistive ou électrostatique avec la natte du siège chauffant (510).

8. Procédé pour commander l'équipement véhicule (120), le procédé consistant en :
l'évaluation d'un état de commande d'un élément de commande (112; 600) d'un équipement (120),
la reconnaissance si un signal est présent qui est attribué à un opérateur (100) de l'élément de commande (112; 600) d'un équipement (120),
l'attribution de l'état de commande évalué à un premier opérateur (100) de l'équipement (120) lorsque le signal est présent, et
sur la base de l'état de commande évalué :
l'activation d'une première fonction d'équipement (122) lorsque le signal de l'élément de commande (112; 600) d'un équipement (120) est présent,
**caractérisé en ce que**
le procédé consiste en outre en l'attribution d'un état de commande évalué à un deuxième opérateur de l'élément de commande (112; 600) d'un équipement (120) lorsque le signal n'est pas présent, et sur la base de l'état de commande évalué :
l'activation d'une deuxième fonction d'équipement lorsque le signal n'est pas présent.

9. Procédé selon la revendication 8, consistant encore en :
la transmission d'un signal d'un générateur de signaux (108; 518) au moyen d'un opérateur (100) à une surface conductrice (606; 608; 610; 612) de l'élément de commande (112; 600) d'un équipement (120), le signal étant un signal accouplé de manière capacitive, résistive ou électrostatique engendré par le générateur de signaux (108; 518).

10. Procédé selon la revendication 8, l'évaluation de l'état de commande contenant la détermination de la position d'une entrée à l'élément de commande (112; 600) d'un équipement (120).

11. Procédé selon la revendication 10, consistant encore en : l'allocation de l'entrée à l'élément de commande (112; 600) d'un équipement (120) lorsque le signal est présent à un premier occupant (100) d'un véhicule automobile et l'allocation de l'entrée à l'élément de commande (112; 600) d'un équipement (120) lorsque le signal n'est pas présent à un deuxième occupant d'un véhicule automobile.

12. Procédé selon la revendication 8, consistant encore en : l'allocation d'une commande d'équipement (112; 600) à un opérateur spécifique (100) parmi plusieurs opérateurs sur la base de la reconnaissance du signal.

13. Procédé selon la revendication 12, consistant encore en l'affichage au moyen d'un capteur (106; 510) pour reconnaître les occupants, si un conducteur (100) ou un passager avant se trouvent sur le siège avant (104) d'un véhicule automobile.

14. Procédé selon la revendication 13, le signal étant opérationnellement accouplé au siège du passager avant lorsque le capteur de reconnaissance des occupants signale que le siège du passager avant est occupé et où le signal n'est pas accouplé au siège du passager avant lorsque le capteur de reconnaissance des occupants signale que le siège du passage avant n'est pas occupé.

15. Procédé selon la revendication 8, consistant encore en : l'affiche d'une surface de commande/ d'un bouton de commande (610; 612) qui est visible sous l'angle visuel d'un passager avant sur un écran tactile à double vision (600) dans un véhicule automobile, et
l'affiche d'une surface de commande/ d'un bouton de commande (606; 608) qui est visible sous l'angle visuel d'un conducteur (100) sur un écran tactile à double vision (600) dans le véhicule automobile, l'activation de la première fonction d'équipement contenant l'activation d'une fonction qui est attribuée à un occupant dans le véhicule automobile lorsque l'écran tactile (600) est touché sur un endroit qui correspond à la surface de commande/ au bouton de commande (608; 610) visible sous l'angle visuel de l'occupant et
lorsque le signal est présent et l'activation de la deuxième fonction d'équipement (112) contenant l'activation d'une fonction qui est attribuée à un conducteur (100) dans le véhicule automobile lorsque l'écran tactile (600) est touché sur un endroit qui correspond à la surface de commande/ au bouton de commande (608; 610) visible sous l'angle du conducteur (100) et lorsque le signal n'est pas présent.

16. Procédé selon la revendication 15, consistant encore en la désactivation de la deuxième fonction d'équipement (122) lorsque le signal n'est pas présent et le véhicule automobile est en mouvement.
